# EUROPÄISCHE PATENTSCHRIFT

(11) **EP 3 906 182 B1**
(45) Veröffentlichungstag und Bekanntmachung des Hinweises auf die Patenterteilung: **28.06.2023**
(21) Anmeldenummer: 20704447.0
(22) Anmeldetag: 03.02.2020
(51) Int. Cl.: B61D 37/00, B60N 3/00

(54) **VORRICHTUNG ZUM ANBINDEN EINER TISCHPLATTE AN EINE SEITENWAND EINES SCHIENENFAHRZEUGS UND SCHIENENFAHRZEUG**
DEVICE FOR CONNECTING A TABLETOP TO A SIDE WALL OF A RAIL VEHICLE, AND RAIL VEHICLE
DISPOSITIF SERVANT À ATTACHER UN PLATEAU DE TABLE À UNE PAROI LATÉRALE D'UN VÉHICULE SUR RAILS, ET VÉHICULE SUR RAILS

(30) Priorität: 01.03.2019 DE 102019202832
(43) Veröffentlichungstag der Anmeldung: 10.11.2021
(73) Patentinhaber: Siemens Mobility GmbH, 81739 München (DE)
(72) Erfinder: SCHMIDT, Gerhard, 45127 Essen (DE)
(74) Vertreter: Siemens Patent Attorneys
(86) Internationale Anmeldenummer: PCT/EP2020/052587
(87) Internationale Veröffentlichungsnummer: WO 2020/177960

(56) Entgegenhaltungen:
- WO-A1-2011/009679
- FR-A1- 2 994 410
- US-A1- 2015 366 337

## Beschreibung

Die Erfindung betrifft eine Vorrichtung zum Anbinden einer Tischplatte an eine Seitenwand eines Schienenfahrzeugs für eine quer zur Fahrtrichtung angeordnete Sitzgruppe nach dem Oberbegriff von Anspruch 1. Die Erfindung betrifft ferner ein Schienenfahrzeug mit einer solchen Vorrichtung.

Eine solche Vorrichtung ist beispielsweise aus der FR 2 994 410 A1 bekannt.

Schienenfahrzeuge zur Beförderung von Personen weisen in der Regel Sitzgruppen aus gegenüberliegenden, quer zur Fahrtrichtung angeordneten Sitzen auf, zwischen denen häufig ein fest installierter Tisch angeordnet ist. Solche Tische müssen die Beanspruchungen des Betriebs sowie definierten außergewöhnlichen Lasten (z.B. Vandalismus) ohne Beschädigung aushalten. Bei Kollisionen der Schienenfahrzeuge mit Hindernissen und daraus resultierenden hohen Längsverzögerungen treten durch den Aufprall der Insassen an der Tischkante deutlich höhere Lasten auf. Die Befestigung des Tisches im Schienenfahrzeug soll dabei die Bewegung des Tisches so begrenzen, dass der Überlebensraum der gegenüber, d.h. mit den Rücken zu Fahrtrichtung sitzenden, Insassen nicht beeinträchtigt wird. Andererseits ist eine kontrollierte Nachgiebigkeit der Tischkante vorteilhaft für die Begrenzung der Aufprallkräfte zur Vermeidung oder Reduktion von Verletzungen.

Eine Aufgabe der vorliegenden Erfindung besteht darin, eine Vorrichtung zum Anbinden einer Tischplatte an eine Seitenwand eines Schienenfahrzeugs zu schaffen, die eine sichere und zuverlässige Stützstruktur bereitstellt, welche insbesondere eine Verletzungsgefahr für Fahrgäste im Betrieb eines Schienenfahrzeugs gering hält.

Die Aufgabe wird durch eine Vorrichtung und ein Schienenfahrzeug mit den Merkmalen des jeweiligen unabhängigen Patentanspruchs gelöst. Vorteilhafte Ausgestaltungen der Vorrichtung sind in den abhängigen Patentansprüchen angegeben.

Gemäß der Erfindung weist eine Vorrichtung zum Anbinden eines Tisches an eine Seitenwand eines Schienenfahrzeugs eine Tischplatte und eine Stützkomponente auf, die ein Tischbein und eine Tischbeinbefestigung umfasst. Das Tischbein ist aufrecht angeordnet an der Tischplatte befestigt und dazu ausgebildet, die Tischplatte mittels der Tischbeinbefestigung mit einem Boden des Schienenfahrzeugs zu koppeln. Die Vorrichtung weist ferner eine Seitenwandanbindung auf, die mit der Tischplatte gekoppelt ist und dazu ausgebildet ist, die Tischplatte mit der Seitenwand des Schienenfahrzeugs zu koppeln. Die Vorrichtung weist weiter einen Torsionsbalken auf, der unterhalb einer Oberseite der Tischplatte angeordnet ist und einerseits mit dem Tischbein und andererseits mit der Seitenwandanbindung gekoppelt ist, sodass bezogen auf einen an der Seitenwand angeordneten Zustand der Vorrichtung zwischen der Tischbeinbefestigung und der Seitenwand des Schienenfahrzeugs ein biege- und torsionsfester Lastpfad ausgebildet ist und bei einem Auftreten einer in Fahrtrichtung des Schienenfahrzeugs auf die Tischplatte wirkenden Kraft ein Drehmoment mittels des Lastpfads an die Seitenwand überleitbar ist, wobei ein erstes Ende des Torsionsbalkens, welches bezogen auf einen an der Seitenwand angeordneten Zustand der Vorrichtung der Seitenwand zugewandt ist, relativ zu der Seitenwandanbindung in Fahrtrichtung (F) des Schienenfahrzeugs beweglich ausgebildet ist.

Mittels der beschriebenen Vorrichtung ist eine sichere und zuverlässige Stützstruktur zur Seitenwandanbindung eines Tisches für eine quer zur Fahrtrichtung angeordnete Sitzgruppe eines Schienenfahrzeugs realisierbar, die mit hoher Stabilität die Verletzungsgefahr der Fahrgäste im Betrieb, insbesondere bei Kollisionen, deutlich vermindert, ohne dass Komforteinbußen hingenommen werden müssen. Die Vorrichtungen sind gemäß ihrem jeweiligen Aufbau so eingerichtet, dass Kräfte bzw. Drehmomente, die auf den Tisch bzw. an der Tischplatte wirken, durch den vorgegeben ausgebildeten Lastpfad zuverlässig aufgenommen und sicher abgeleitet werden.

Es ist eine Erkenntnis im Zusammenhang mit der vorliegenden Erfindung, dass Tische, insbesondere von Schienenfahrzeugen, die quer zu der Fahrtrichtung eines Schienenfahrzeugs angeordnet werden, bei einem Sekundäraufprall im Fall von Kollisionen ein erhebliches Verletzungsrisiko für die Fahrgäste darstellen. Die beschriebenen Vorrichtungen stellen daher mittels einer jeweils nachgiebigen Befestigung der in sich starren Tischplatte eine gezielte Nachgiebigkeit der Tischplatte zur Begrenzung der Kräfte bereit. Eine Dimensionierung ergibt sich bei einer an der Seitenwand befestigten Tischplatte daraus, dass bei weit von der Seitenwand entfernten Aufprallpositionen große Biegemomente aufzunehmen sind, bei näher an der Seitenwand liegenden Aufprallpositionen dennoch die Kräfte zu begrenzen sind.

Die beschriebene Vorrichtung ermöglichet mittels des ausgebildeten Lastpfads eine zuverlässige und sichere Aufnahme von solchen Biegemomenten und tragen zudem zu einem übersichtlichen und platzsparenden Aufbau bei. Es werden keine komplexen Schienensysteme benötigt, die ein Verschieben der Tischplatte in Fahrtrichtung bei einer Kollision ermöglichen. Darüber hinaus wird ein Freiraum für Füße eines Fahrgastes mit dem beschriebenen Aufbau der jeweiligen Vorrichtungen nicht eingeschränkt.

Das Tischbein und dessen Befestigung an einem Boden des Schienenfahrzeugs ist vorzugsweise so ausgestaltet, dass es nicht nur der Fixierung gegen Wegrutschen und Abheben dient, sondern auch eine Übertragung großer Biegemomente ermöglicht. Eine Ableitung von Aufprallkräften erfolgt entlang des Lastpfads von dem Tischbein aus bis zur Seitenwandanbindung an die Seitenwand. Auf diese Weise kann eine momentenfreie Einleitung von Längskräften in die untere Tischbeinbefestigung des Tischbeins durch seine biegefeste Ausbildung und die Ableitung von Versatzmomenten über eine an einem oberen Ende des Tischbeins angeschlossene torsionsfeste Verbindung zur Seitenwand erreicht werden.

In dieser Beschreibung beziehen sich Begriffe, wie "oben", "unten", "Oberseite", "Unterseite", "Fahrtrichtung", "Querrichtung", auf eine Ausrichtung der jeweiligen Vorrichtung hinsichtlich eines betriebsgemäß angeordneten und einsatzbereiten Zustands an einer Seitenwand eines Schienenfahrzeugs. Somit bildet zum Beispiel das aufrecht angeordnete Tischbein ein vertikal ausgerichtetes Stützelement aus, während sich die Tischplatte im Wesentlichen in einer horizontalen Ebene quer zu der Seitenwand und parallel zu dem Boden des Schienenfahrzeugs erstreckt. Die jeweilige Vorrichtung ist dazu vorgesehen, an der Seitenwand des Schienenfahrzeugs angebunden zu werden. Das Schienenfahrzeug mit einer darin angeordneten Vorrichtung bildet dann ein System aus.

Eine torsionsfeste Anbindung des oberen Endes des Tischbeins an die Seitenwand kann in einer besonders einfachen Ausführungsform mittels der Tischplatte erfolgen. Vorzugsweise ist eine torsionsfeste Anbindung des oberen Endes des Tischbeins mittels des Torsionsbalkens realisiert, welcher innerhalb oder unterhalb der Tischplatte angeordnet ist. Der Torsionsbalken ist zum Beispiel als hohlförmiges Quaderelement aus Blech ausgebildet. Alternativ kann der Torsionsbalken auch zylinder- oder rohrförmig ausgestaltet sein. Der Torsionsbalken bildet einen stabilisierenden Abschnitt des Lastpfads und trägt zu einer besonders sicheren und zuverlässigen Möglichkeit einer Tischanbindung bei.

Die Vorrichtung kann eine Führungseinheit umfassen, die mit dem Torsionsbalken gekoppelt ist und dazu eingerichtet ist, eine Führung für das bewegliche erste Ende des Torsionsbalkens bereitzustellen. Somit ist das wandseitige Ende des Torsionsbalkens geführt gelagert und kann eine zuverlässige und sichere Kompensationsbewegung bei einem Wirken einer Kraft in Fahrtrichtung ausführen.

Gemäß einer weiteren bevorzugten Weiterbildung umfasst die Führungseinheit zwei Lenkerelemente, die bezogen auf einen an der Seitenwand angeordneten Zustand der Vorrichtung in Fahrtrichtung beabstandet zueinander aufrecht angeordnet sind und an einem jeweiligen oberen Ende mit dem ersten Ende des Torsionsbalkens und an einem jeweiligen unteren Ende mit der Seitenwandanbindung mittels gelenkiger Anbindungen verbunden sind. Die gelenkigen Anbindungen der Lenkerelemente können zum Beispiel als plastische Gelenke ausgebildet sein. Auf diese Weise kann eine zuverlässige Führung durch die zwei in Fahrzeug-Längsrichtung bzw. in Fahrtrichtung beabstandet angeordnete Lenkerelemente erfolgen. Durch eine relativ große Länge der Lenkerelemente und des Tischbeins können große Verformungswege der Tischplatte bzw. der Vorrichtung in Fahrzeuglängsrichtung ermöglichen.

Gemäß einer weiteren bevorzugten Weiterbildung der Vorrichtung sind die Lenkerelemente hinsichtlich ihrer jeweiligen Längsachse so gegeneinander geneigt, dass sie sich in einem virtuellen Schnittpunkt unterhalb eines Fußbodenniveaus des Schienenfahrzeugs schneiden. Durch diesen virtuellen Schnittpunkt und einem Fußpunkt der Tischbeinbefestigung ist dann eine ideelle Drehachse definiert, die die Tischplatte durchdringt bzw. einen Tischplattenschnittpunkt mit der Tischplatte aufweist. Dieser Tischplattenschnittpunkt liegt dabei annähernd vor einer Aufprallposition eines von der Seitenwand entfernt sitzenden Fahrgastes. Anders formuliert liegt der Tischplattenschnittpunkt bezogen auf einen an der Seitenwand angeordneten Zustand der Vorrichtung hinsichtlich einer Querrichtung quer zu der Seitenwand näher an einer Fahrzeugmitte des Schienenfahrzeugs als an der Seitenwand. Mit der gezielten Ausbildung einer virtuellen Drehachse können die Verformungseigenschaften der vor dieser Achse liegenden Aufprallpositionen weitgehend unabhängig von denen der näher an der Seitenwand liegenden Aufprallpositionen eingestellt werden

Gemäß einer weiteren Weiterbildung der Vorrichtung ist das Tischbein bezogen auf eine zugehörige Längsachse an einem unteren Ende, welches der Tischbeinbefestigung zugewandt ist, schmaler ausgebildet als an einem oberen Ende, welches der Tischplatte zugewandt ist. Beispielsweise ist das Tischbein keil-, trichter- oder kegelstumpfförmig ausgebildet und verjüngt sich in Richtung der Tischbeinbefestigung. Das Tischbein ist vorzugsweise im Bereich der Tischbeinbefestigung nahe dem Boden relativ schmal ausgestaltet, sodass in seinem Anschluss zu der Tischbeinbefestigung keine wesentlichen Biegemomente übertragen werden.

Mittels der beschriebenen Vorrichtungen sind vorgabenerfüllende, crashgerechte Lösungen realisierbar, die zu einer erhöhten Sicherheit beitragen und auch auf relativ schmale Tische skalierbar sind. Die jeweilige Vorrichtung stellt eine konsequente Ausbildung eines biege- und torsionsfesten Lastpfads von der Fußpunktanbindung bzw. Tischbeinbefestigung des Tischbeins bis zur Seitenwand bereit. Insbesondere eine in Fahrtrichtung bewegliche, aber um eine Fahrzeugquerachse torsionsfeste Seitenwandanbindung der Tischplatte trägt zu einer sicheren und zuverlässigen Tischanbindungsvorrichtung mit verringertem Verletzungsrisiko für Fahrgäste bei. Die Tischbeinbefestigung und der Seitenwandanschluss bzw. die Seitenwandanbindung realisieren eine relative breite Abstützbasis, sodass vergleichsweise bauraum- und gewichtseffiziente Ausführungen der Vorrichtungen realisiert werden können.

Mittels der Vorrichtung werden die bei einer Kollision auftretenden Längskräfte nicht ausschließlich über die Seitenwandanbindung sondern auch mittels des Tischbeins und des bevorzugt vorgesehenen Torsionsbalkens übertragen. Die beschriebenen Vorrichtungen ermöglichen jeweils eine effiziente Lösung insbesondere für hohe Sekundäraufprallgeschwindigkeiten eines auf die Tischplatte auftreffenden Fahrgastes.

Gemäß einem weiteren Aspekt der Erfindung umfasst ein Schienenfahrzeug eine Ausgestaltung einer der zuvor beschriebenen Vorrichtungen zum Anbinden einer Tischplatte an eine Seitenwand des Schienenfahrzeugs, die mittels der Seitenwandanbindung mit der Seitenwand und mittels des Tischbeins und der Tischbeinbefestigung mit dem Boden gekoppelt ist.

Die Vorrichtung dient insbesondere zum Anbinden eines Tisches für eine quer zur Fahrtrichtung angeordnete Sitzgruppe. Dadurch, dass das Schienenfahrzeug eine Ausgestaltung der zuvor beschriebenen Vorrichtung umfasst, sind beschriebene Eigenschaften und Merkmale der Vorrichtung auch für das Schienenfahrzeug offenbart und umgekehrt.

Ausführungsbeispiele der Erfindung sind im Folgenden anhand der schematischen Zeichnungen näher erläutert. Es zeigen:
- Figur 1: eine schematische Darstellung eines Schienenfahrzeugs mit einer Vorrichtung zum Anbinden einer Tischplatte an eine Seitenwand, und
- Figur 2: ein Ausführungsbeispiel der Vorrichtung zum Anbinden einer Tischplatte an eine Seitenwand des Schienenfahrzeugs.

Elemente gleicher Konstruktion und Funktion sind figurenübergreifend mit denselben Bezugszeichen gekennzeichnet. Aus Gründen der Übersichtlichkeit sind gegebenenfalls nicht alle Elemente in sämtlichen Figuren mit zugehörigen Bezugszeichen gekennzeichnet.

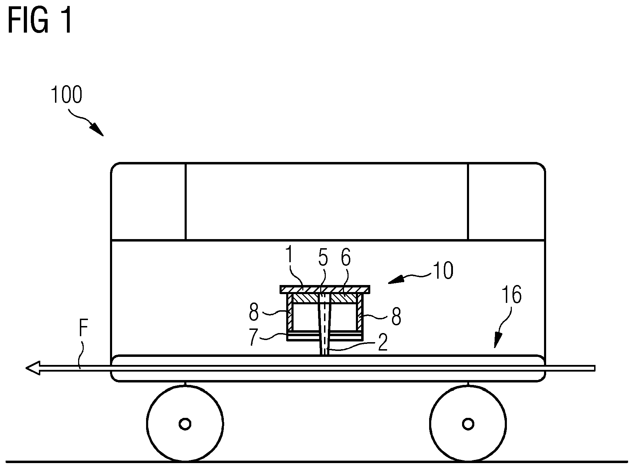

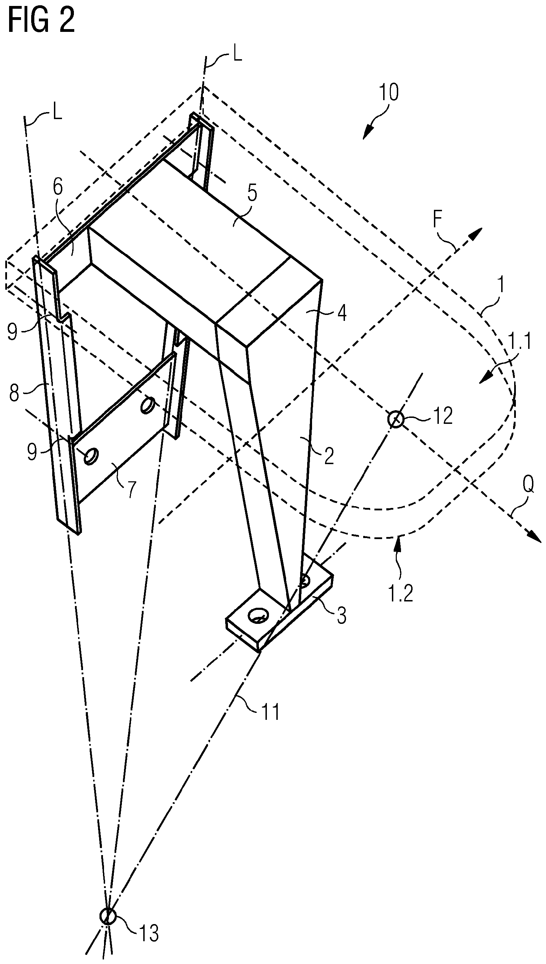

Figur 1 zeigt in einer schematischen Seitenansicht ein Schienenfahrzeug 100 mit einer Vorrichtung 10 zum Anbinden eines Tisches an eine Seitenwand des Schienenfahrzeugs 100. Wie nachfolgend anhand der Figur 2 erläutert wird, stellt die Vorrichtung 10 eine sichere und zuverlässige Stützstruktur bereit, welche insbesondere eine Verletzungsgefahr für Fahrgäste in einem Betrieb des Schienenfahrzeugs 100 gering hält.

Die Vorrichtung 10 weist eine Tischplatte 1, ein Tischbein 2 und eine Tischbeinbefestigung 3 auf (s. Figur 2). Das Tischbein 2 ist aufrecht angeordnet an der Tischplatte 1 befestigt und verbindet die Tischplatte 1 mittels der Tischbeinbefestigung 3 mit einem Boden 16 des Schienenfahrzeugs 100. Die Vorrichtung 10 weist ferner eine Seitenwandanbindung 7 auf, die mittels Lenkerelemente 8 und eines Torsionsbalkens 5 mit der Tischplatte 1 gekoppelt ist. Die Seitenwandanbindung 7 koppelt die Tischplatte 1 mit der Seitenwand des Schienenfahrzeugs 100.

Der Torsionsbalken 5 ist unterhalb einer Oberseite 1.1 der Tischplatte 1 angeordnet und einerseits mit dem Tischbein 2 und andererseits mit der Seitenwandanbindung 7 gekoppelt, sodass zwischen der Tischbeinbefestigung 3 und der Seitenwand des Schienenfahrzeugs 100 ein biege- und torsionsfester Lastpfad ausgebildet ist und bei einem Auftreten einer in Fahrtrichtung F des Schienenfahrzeugs 100 auf die Tischplatte 1 wirkenden Kraft ein Drehmoment mittels des Lastpfads an die Seitenwand überleitbar ist.

Das Tischbein 2 ist keilförmig ausgebildet und verjüngt sich in Richtung der Tischbeinbefestigung 3. Die Tischbeinbefestigung 3 ist zum Beispiel mit dem Boden 16 fest verschraubt und bildet eine relativ breite Abstützbasis aus. Das Tischbein 2 ist an seinem Fußpunkt bzw. an seinem unteren Ende relativ schmal ausgebildet und mit seinem oberen Tischbeinende 4 mit der Tischplatte 1 und dem Torsionsbalken verbunden. Alternativ oder zusätzlich ist der Torsionsbalken 5 mit der Tischplatte 1 verbunden. Das Tischbein 2 ist so ausgestaltet, dass in seinem unteren Anschluss zu der Fußplatte bzw. der Tischbeinbefestigung 3 keine wesentlichen Biegemomente übertragen werden.

Begriffe, wie "oben", "unten", "Oberseite", "Unterseite", "Fahrtrichtung", "Querrichtung", beziehen sich auf eine Ausrichtung der Vorrichtung 10 hinsichtlich eines betriebsgemäß angeordneten und einsatzbereiten Zustands an der Seitenwand des Schienenfahrzeugs 100. Somit erstreckt sich die Tischplatte 1 im Wesentlichen in einer horizontalen Ebene quer zu der Seitenwand und parallel zu dem Boden 16 des Schienenfahrzeugs 100.

Ein wandseitiges Ende 6 des Torsionsbalkens 5 ist relativ zu der Seitenanbindung 7 bezogen auf die Fahrzeuglängsrichtung bzw. die Fahrtrichtung F mittels der Lenkerelemente 8 beweglich geführt gelagert. Das wandseitige Ende 6 kann einstückig mit dem Torsionsbalken 5 ausgeführt sein oder ein separates flächiges Blechelement realisieren, welches mit dem Torsionsbalken 5 verbunden ist und das wandseitige Ende 6 des Torsionsbalkens 5 ausbildet. Der Torsionsbalken 5 ist innerhalb oder unterhalb der Tischplatte 1 angeordnet und schließt zum Beispiel mit einer Unterseite 1.2 der Tischplatte 1 bündig ab. Auf diese Weise wird ein besonders platzsparender Aufbau der Vorrichtung 10 realisiert, welcher eine Beinfreiheit von Fahrgästen unterhalb der Tischplatte 1 nicht oder nicht wesentlich einschränkt.

Die Vorrichtung 10 erlaubt eine momentenfreie Einleitung von Längskräften in die untere Tischbeinbefestigung 3 des Tischbeins 2 durch seine biegefeste Ausbildung und die Ableitung eines Versatzmoments über eine an dem oberen Ende 4 des Tischbeins 2 angeschlossene torsionsfeste Verbindung zur Seitenwand in Form des Torsionsbalkens 5 und der Seitenwandanbindung 7.

Die in Fahrtrichtung F eingerichtete Führung des wandseitigen Endes 6 des Torsionsbalkens 5 ist durch die beabstandet angeordneten Lenkerelemente 8 bereitgestellt, welche jeweils mittels einer oberen und einer unteren gelenkigen Anbindung 9 mit dem Endträger bzw. dem wandseitigen Ende 6 des Torsionsbalkens 5 und mit der Seitenwandanbindung 7 verbunden sind.

Die gelenkigen Anbindungen 9 können zum Beispiel als plastische Gelenke ausgeführt sein, die ein Abknicken oder Scheren der Tischplatte 1 ermöglichen.

Die Lenkerelemente 8 sind so gegeneinander geneigt, dass sie sich in einem virtuellen Schnittpunkt 10 unterhalb eines Fußbodenniveaus des Bodens 16 schneiden, sodass durch diesen Schnittpunkt 10 und einen Fußpunkt der Tischbeinbefestigung 3 des Tischbeins 2 hindurch eine ideelle Drehachse 11 definiert wird. Die ideelle Drehachse 11 durchdringt die Tischplatte 1 in einem Tischplattenschnittpunkt 12, der annähernd vor einer Aufprallposition eines von der Seitenwand entfernt sitzenden Fahrgastes liegt. Die Lenkerelemente 8 bilden somit eine in Fahrtrichtung F bewegliche, aber um eine Fahrzeugquerachse Q torsionsfeste Seitenwandanbindung der Tischplatte 1 aus. Mit der Ausbildung einer virtuellen Drehachse 11 können die Verformungseigenschaften der vor dieser Drehachse 11 liegenden Aufprallpositionen weitgehend unabhängig von denen der näher an der Seitenwand liegenden Aufprallpositionen eingestellt werden.

Mit der Nutzung einer relativ breiten Abstützbasis aus Tischbeinbefestigung 3 und Seitenwandanbindung 7 können vergleichsweise bauraum- und gewichtseffiziente Ausführungen der Vorrichtung 10 realisiert werden. Die Vorrichtung 10 realisiert somit eine konsequente Ausbildung eines biege- und torsionsfesten Lastpfads von der Fußpunktanbindung bzw. Tischbeinbefestigung 3 des Tischbeins 2 bis hin zur Seitenwand. Somit ist eine sichere und zuverlässige Stützstruktur zur Seitenwandanbindung eines Tisches für eine quer zur Fahrtrichtung F angeordnete Sitzgruppe des Schienenfahrzeugs 100 realisierbar, die mit hoher Stabilität die Verletzungsgefahr der Fahrgäste im Betrieb, insbesondere bei Kollisionen, deutlich vermindert, ohne dass Komforteinbußen hingenommen werden müssen. Kräfte bzw. Drehmomente, die zum Beispiel bei einer Kollision des Schienenfahrzeugs 100 auf den Tisch bzw. an der Tischplatte 1 wirken, werden durch den biege- und torsionsfesten Lastpfad zuverlässig aufgenommen und sicher abgeleitet werden.

## Patentansprüche

1. Vorrichtung (10) zum Anbinden eines Tisches an eine Seitenwand eines Schienenfahrzeugs (100), aufweisend:
- eine Tischplatte (1),
- eine Stützkomponente, die ein Tischbein (2) und eine Tischbeinbefestigung (3) umfasst, wobei das Tischbein (2) aufrecht angeordnet an der Tischplatte (1) befestigt ist und dazu ausgebildet ist, die Tischplatte (1) mittels der Tischbeinbefestigung (3) mit einem Boden (16) des Schienenfahrzeugs (100) zu koppeln,
- eine Seitenwandanbindung (7), die mit der Tischplatte (1) gekoppelt ist und dazu ausgebildet ist, die Tischplatte (1) mit der Seitenwand des Schienenfahrzeugs (100) zu koppeln, und
- einen Torsionsbalken (5), der unterhalb einer Oberseite (1.1) der Tischplatte (1) angeordnet ist und einerseits mit dem Tischbein (2) und andererseits mit der Seitenwandanbindung (7) gekoppelt ist, sodass bezogen auf einen an der Seitenwand angeordneten Zustand der Vorrichtung (10) zwischen der Tischbeinbefestigung (3) und der Seitenwand des Schienenfahrzeugs (100) ein biege- und torsionsfester Lastpfad ausgebildet ist und bei einem Auftreten einer in Fahrtrichtung (F) des Schienenfahrzeugs (100) auf die Tischplatte (1) wirkenden Kraft ein Drehmoment mittels des Lastpfads an die Seitenwand überleitbar ist,
**dadurch gekennzeichnet, dass**
ein erstes Ende (6) des Torsionsbalkens (5), welches bezogen auf einen an der Seitenwand angeordneten Zustand der Vorrichtung (10) der Seitenwand zugewandt ist, relativ zu der Seitenwandanbindung (7) in Fahrtrichtung (F) des Schienenfahrzeugs (100) beweglich ausgebildet ist.

2. Vorrichtung (10) nach Anspruch 1, aufweisend:
eine Führungseinheit, die mit dem Torsionsbalken (5) gekoppelt ist und dazu eingerichtet ist, eine Führung für das bewegliche erste Ende (6) des Torsionsbalkens (5) bereitzustellen.

3. Vorrichtung (10) nach Anspruch 2, bei der die Führungseinheit zwei Lenkerelemente (8) umfasst, die bezogen auf einen an der Seitenwand angeordneten Zustand der Vorrichtung (10) in Fahrtrichtung (F) beabstandet zueinander aufrecht angeordnet sind und an einem jeweiligen oberen Ende mit dem ersten Ende (6) des Torsionsbalkens (5) und an einem jeweiligen unteren Ende mit der Seitenwandanbindung (7) mittels gelenkiger Anbindungen (9) verbunden sind.

4. Vorrichtung (10) nach Anspruch 3, bei der die jeweiligen gelenkigen Anbindungen (9) der Lenkerelemente (8) als plastische Gelenke ausgebildet sind.

5. Vorrichtung (10) nach Anspruch 3 oder 4, bei der die Lenkerelemente (8) eine jeweilige Längsachse (L) aufweisen, die so gegeneinander geneigt sind, dass sie sich in einem virtuellen Schnittpunkt (13) schneiden, der zusammen mit einem Fußpunkt der Tischbeinbefestigung (3) eine ideelle Drehachse (11) definiert, die einen Tischplattenschnittpunkt (12) mit der Tischplatte (1) aufweist, welcher bezogen auf einen an der Seitenwand angeordneten Zustand der Vorrichtung (10) hinsichtlich einer Querrichtung (Q) quer zu der Seitenwand näher an einer Fahrzeugmitte des Schienenfahrzeugs (100) liegt als an der Seitenwand.

6. Vorrichtung (10) nach einem der Ansprüche 1 bis 5, bei der das Tischbein (2) bezogen auf eine Längsachse an einem unteren Ende, welches der Tischbeinbefestigung (3) zugewandt ist, schmaler ausgebildet ist als an einem oberen Ende, welches der Tischplatte (1) zugewandt ist.

7. Vorrichtung (10) nach einem der Ansprüche 1 bis 6, bei der das Tischbein (2) keil-, trichter- oder kegelstumpfförmig ausgebildet ist und sich in Richtung der Tischbeinbefestigung (3) hin verjüngt.

8. Schienenfahrzeug (100), umfassend:
- eine Seitenwand und einen Boden (16), und
- eine Vorrichtung (10) nach einem der Ansprüche 1 bis 7, die mittels der Seitenwandanbindung (7) mit der Seitenwand und mittels des Tischbeins (2) und der Tischbeinbefestigung (3) mit dem Boden (16) gekoppelt ist.

## Claims

1. Device (10) for connecting a table to a side wall of a rail vehicle (100), having:
- a table top (1),
- a supporting component, which comprises a table leg (2) and a table leg fixing (3), wherein the table leg (2) is fixed upright to the table top (1) and is designed to couple the table top (1) to a floor (16) of the rail vehicle (100) by means of the table leg fixing (3),
- a side wall connection (7), which is coupled to the table top (1) and is designed to couple the table top (1) to the side wall of the rail vehicle (100), and
- a torsion beam (5), which is arranged underneath an upper side (1.1) of the table top (1) and is coupled on one side to the table leg (2) and on the other side to the side wall connection (7) so that, in relation to a state of the device (10) arranged on the side wall, a load path that is resistant to bending and torsion is formed between the table leg fixing (3) and the side wall of the rail vehicle (100) and, in the event of an occurrence of a force acting on the table top (1) in the direction of travel (F) of the rail vehicle (100), a torque can be transferred to the side wall by means of the load path,
**characterized in that** a first end (6) of the torsion beam (5) which, in relation to a state of the device (10) arranged on the side wall, faces the side wall, is designed to be movable relative to the side wall connection (7) in the direction of travel (F) of the rail vehicle (100).

2. Device (10) according to Claim 1, having:
a guide unit, which is coupled to the torsion beam (5) and is configured to provide a guide for the movable first end (6) of the torsion beam (5).

3. Device (10) according to Claim 2, in which the guide unit comprises two link elements (8) which, in relation to a state of the device (10) arranged on the side wall, are arranged upright at a distance from each other in the direction of travel (F) and are connected at a respective upper end to the first end (6) of the torsion beam (5) and at a respective lower end to the side wall connection (7) by means of articulated connections (9).

4. Device (10) according to Claim 3, in which the respective articulated connections (9) of the link elements (8) are formed as plastic joints.

5. Device (10) according to Claim 3 or 4, in which the link elements (8) have a respective longitudinal axis (L), which are inclined relative to each other in such a way that they intersect at a virtual intersection point (13) which, together with a base point of the table leg fixing (3), defines an ideal axis of rotation (11), which has a table-top point of intersection (12) with the table top (1) which, in relation to a state of the device (10) arranged on the side wall, with regard to a transverse direction (Q) transverse to the side wall, is located closer to a vehicle centre of the rail vehicle (100) than to the side wall.

6. Device (10) according to one of Claims 1 to 5, in which, in relation to a longitudinal axis, the table leg (2) is designed to be narrower at a lower end which faces the table leg fixing (3) than at an upper end which faces the table top (1).

7. Device (10) according to one of Claims 1 to 6, in which the table leg (2) is formed in the shape of a wedge, funnel or truncated cone and tapers in the direction of the table leg fixing (3).

8. Rail vehicle (100), comprising:
- a side wall and a floor (16), and
- a device (10) according to one of Claims 1 to 7, which is coupled to the side wall by means of the side wall connection (7) and to the floor (16) by means of the table leg (2) and the table leg fixing (3).

## Revendications

1. Dispositif (10) de liaison d'une table à une paroi latérale d'un véhicule (100) ferroviaire, comportant :
- un plateau (1) de table,
- un élément d'appui, qui comprend un pied (2) de la table et une fixation (3) du pied de la table, dans lequel le pied (2) de la table est fixé au plateau (1) de la table en étant disposé verticalement et est constitué de manière à relier le plateau (1) de la table, au moyen de la fixation (3) du pied de la table, à un plancher (16) du véhicule (100) ferroviaire,
- une liaison (7) de paroi latérale, qui est reliée au plateau (1) de la table et qui est constituée pour relier le plateau (1) de la table à la paroi latérale du véhicule (100) ferroviaire,
- une poutre (5) de torsion, qui est disposée en-dessous d'une face (1.1) supérieure du plateau (1) de la table et qui est reliée d'une part au pied (2) de la table et d'autre part à la liaison (7) de paroi latérale, de manière à ce que, rapporté à un état, monté sur la paroi latérale, du dispositif (10), soit constitué, entre la fixation (3) de pied de la table et la paroi latérale du véhicule (100) ferroviaire, un chemin de charge résistant à la flexion et à la torsion et, s'il se produit une force s'appliquant au plateau (1) de la table dans le sens (F) de circulation du véhicule (100) ferroviaire, un couple puisse être transmis à la paroi latérale, au moyen du chemin de charge,
**caractérisé en ce qu'**
une première extrémité (6) de la poutre (5) de torsion, qui, rapporté, à un état, monté sur la paroi latérale, du dispositif (10), est tournée vers la paroi latérale, est constituée de manière mobile dans le sens (F) de circulation du véhicule (100) ferroviaire par rapport à la liaison (7) de paroi latérale.

2. Dispositif (10) suivant la revendication 1, comportant :
une unité de guidage, qui est reliée à la poutre (5) de torsion et qui est agencée pour donner un guidage à la première extrémité (6) mobile de la poutre (5) de torsion.

3. Dispositif (10) suivant la revendication 2, dans lequel l'unité de guidage comprend deux bras (8), qui, rapporté à un état, monté sur la paroi latérale, du dispositif (10), sont disposés verticalement à distance l'un de l'autre, dans la direction (F) de circulation et sont reliés, au moyen de liaisons (9) articulées, à une extrémité supérieure respective à la première extrémité (6) de la poutre (5) de torsion et à une extrémité inférieure respective à la liaison (7) de paroi latérale.

4. Dispositif (10) suivant la revendication 3, dans lequel les liaisons (9) articulées respectives des bras (8) sont constituées sous la forme d'articulations plastiques.

5. Dispositif (10) suivant la revendication 3 ou 4, dans lequel les bras (8) ont un axe (L) longitudinal respectif, qui sont inclinés l'un par rapport à l'autre, de manière à se couper à un point (13) d'intersection virtuelle, qui, ensemble avec un point de pied de la fixation (3) du pied de la table, définissent un point (11) de rotation imaginaire, ayant un point (12) d'intersection avec le plateau (1) de la table, point qui, rapporté à un état, monté sur la paroi latérale, du dispositif (10), est en ce qui concerne une direction (Q) transversale, transversalement à la paroi latérale, plus près d'un milieu du véhicule (100) ferroviaire que de la paroi latérale.

6. Dispositif (10) suivant l'une des revendications 1 à 5, dans lequel le pied (2) de la table est, rapporté à un axe longitudinal à une extrémité inférieure, qui est tournée vers la fixation (3) du pied de la table, plus étroit qu'à une extrémité supérieure, qui est tournée vers le plateau (1) de la table.

7. Dispositif (10) suivant l'une des revendications 1 à 6, dans lequel le pied (2) de la table est en forme de coin, de trémie ou de tronc de cône et se rétrécit dans la direction de la fixation (3) du pied de table.

8. Véhicule (100) ferroviaire, comprenant :
- une paroi latérale et un plancher (16), et
- un dispositif (10) suivant l'une des revendications 1 à 7, qui est, au moyen de la liaison (7) de paroi latérale, relié à la paroi latérale et au moyen du pied (2) de la table et de la fixation (3) du pied de table, relié au plancher (16).
